# EUROPEAN PATENT SPECIFICATION

(11) **EP 3 348 341 B1**
(45) Date of publication and mention of the grant of the patent: **07.04.2021**
(21) Application number: 18151899.4
(22) Date of filing: 16.01.2018
(51) Int. Cl.: B23D 49/16, B23D 59/00

(54) **ELECTRIC CUTTING TOOLS**
ELEKTRISCHE SCHNEIDWERKZEUGE
OUTILS DE COUPE ÉLECTRIQUES

(30) Priority: 16.01.2017 CN 201710032536
(43) Date of publication of application: 18.07.2018
(73) Proprietor: TTI (Macao Commercial Offshore) Limited, Macao (MO)
(72) Inventor: Yang, Ning, Dongguan City, Guangdong (CN); Lee, Hei Man Raymond, Kwai Chung (HK)
(74) Representative: Stevenson-Hill, Jack Patrick

(56) References cited:
- DE-A1-102008 009 887
- DE-A1-102009 035 134
- GB-A- 2 420 087
- US-A1- 2011 310 594

## Description

### FIELD OF INVENTION

The invention relates to an electric cutting tool according to the preamble of claim 1, and more particularly to a cutting device with a work component capable of performing repetitive movement.

### BACKGROUND

Various types of electric cutting tools are widely used in daily life and industries, including jig saws, mitre saws, reciprocating saws and the like. In general, the user makes a cutting member of the electric cutting tool touching the workpiece to be cut during use, and precisely controls the direction, angle and speed of cutting to achieve the desired cutting effect.

However, a problem existing in the present electric cutting tools is that during operation, it is difficult for the user to align the saw blade with the workpieces or to determine the penetration depth of the saw blade. This is because the saw blade usually undergoes high-speed repetitive movements during operation, which makes it difficult to determine a specific position or an extension length of the saw blade with naked eyes. One solution provided in the prior art is to make the electric cutting tool "memorize" the position of the saw blade and then suspend the movement of the saw blade to bring it to a stationary status. The saw blade restores movement after the user having completed the alignment of the saw blade. This method still has deficiency because in order to achieve such functions, not only a large number of components need to be added in the electric cutting tool to assist in achieving the function, but also the electric cutting tool needs to suspend working at all times, and it seriously impacts the efficiency of operation.

DE102008009887 discloses an electric cutting tool according to the preamble of claim 1. According to the abstract of this document, the hand-machine tool has a lighting device i.e. LED, for lighting a working area of a tool e.g. milling tool, that is driven by an electric motor with a working frequency. A lighting control device is provided for controlling the lighting device for production of lighting flashes succeeding with a flash frequency. An operating switch is operatable by an operator for adjusting of the flash frequency and/or phase ratios between the flash frequency and the working frequency. A transparent protection device is provided for shielding of the work area.

### SUMMARY

Therefore, the embodiments of the invention provide an improved electric cutting tool to overcome or at least relieve the above technical problem.

According to the invention, an electric cutting tool defined by the features of claim 1 is provided.

Preferably, the electric cutting tool further contains a sensor for measuring a rotational speed of the motor, and the sensor measures the rotational speed of the motor during operation as well transmitting the speed to the controller. The controller generates a signal according to the speed of the motor and controls the illuminating device to generate the illumination varied in the particular frequency.

More preferably, the sensor is a Hall sensor fixed to the motor.

In a variant embodiment, the electric cutting tool further contains a switch connected to the controller. The switch enables the controller to control the illuminating device to generate the illumination varied in the particular frequency or prohibit the controller to generate the illumination varied in the particular frequency.

In a further variant embodiment, the controller is adapted to prohibit the illuminating device to generate the illumination varied in the particular frequency when the speed of the cutting member is lower than ta threshold.

In a specific embodiment, the electric cutting tool is a jig saw.

In another specific embodiment, wherein the illuminating device is a light-emitting diode.

Therefore, the invention uses the stroboscopic effect to overcome the problem of being difficult to align and measure a position of the cutting member because of the movement of the cutting member of the electric cutting tool leading to an unclear and blurred shadow. The application of the stroboscopic effect does not require any modification to the mechanical transmission part or the motor control circuit of the electric cutting tool, instead it is located in the electric cutting tool as an additional part. During the course of cutting, because the user usually needs to align before a cutting and during a cutting, the technical solution provided by the invention does not need to stop the motor or reduce the speed of the cutting at all to carry out the alignment. Therefore, a high working efficiency can be ensured.

In addition, the electric cutting tool does not need an additional sensor to achieve a controlling of the light stroboscopic frequency, instead it uses the existing motor Hall sensor as a means for of sensing the speed of the movement of the cutting tool. This achieves a minimum change of the structure of the electric cutting tool, and saves the cost. In addition, the present invention can be dynamically adapted to a wide range of operating from low speed to full speed of the motor, without being limited to a certain particular speed range. In addition, the present invention works well under off-load condition as well as actual cutting condition of the electric cutting tools.

### BRIEF DESCRIPTION OF THE DRAWINGS

A further understanding of the nature and advantages of the present invention may be realized with reference to the remaining portions of the specification and the drawings. The same reference numerals are used throughout the several drawings. In some cases, sub-numerals are placed after a certain numeral and hyphen to indicate one of many similar components. When a label is referred but do not specify one of the existing sub-numerals, it is intended to refer to all these similar components.
Fig. 1 is a three-dimensional view of an appearance of the jig saw according to a first embodiment according to the invention;
Fig. 2 is a front view of the jig saw in the Fig. 1, wherein it illustrates a light-emitting diode (LED) mounted on a base plate.
Fig.3 is a top view of the jig saw in the Fig.1, wherein it illustrates a LED mounted on the base plate.
Fig.4 is a schematic diagram of the control circuit of the jig saw in Fig.1.
Fig.5 shows the difference between visual effects caused by a quick illuminating changing frequency and a slow illuminating changing frequency of the LED.

### DETAILED DESCRIPTION OF PREFERRED EMBODIMENTS

Embodiments of the present invention use a stroboscopic effect to reduce the problem of shadows and blurs caused by a moving cutting member to the eyes of the human. Other different advantages and benefits provided by various embodiments of the invention can be easily realized from the following descriptions.

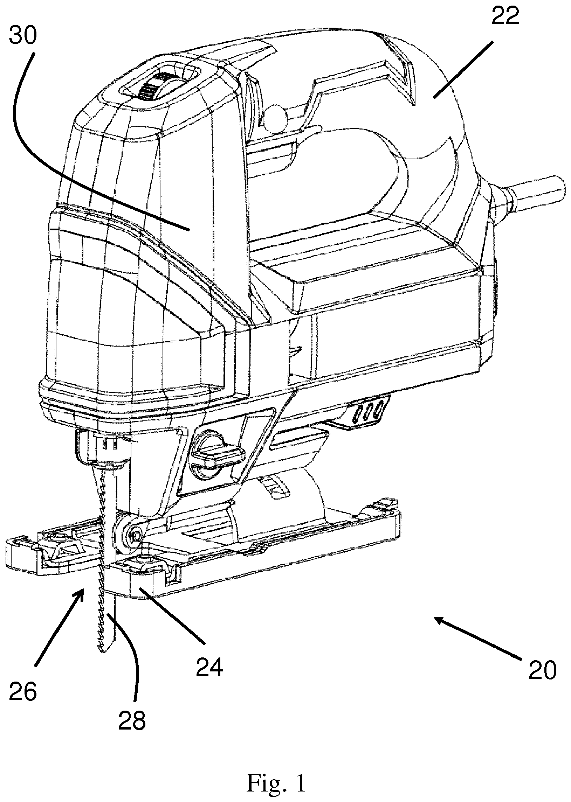

As shown in Fig.1, the first embodiment of the invention is a jig saw **20,** comprising a housing **30,** a saw blade **28,** and a base plate **24.** The housing **30** contains a power system (not shown) including a brushless motor as the core component. The brushless motor is for driving the saw blade **28,** making it moving in a reciprocating way, so as to cut an object (i.e. the workpiece) to be cut that is located outside the base plate **24.** There is an opening **26** in the central position of the base plate **24** to permit the saw blade **28** to penetrate the base plate **24** in a vertical direction. A handle **22** is formed at the rear part of the housing **30** with respect to the saw blade **28,** so as to enable the user grasp the jig saw during use. The conventional structure and the working principle of the jig saw are known to a person skilled in the art and will not be described in details.

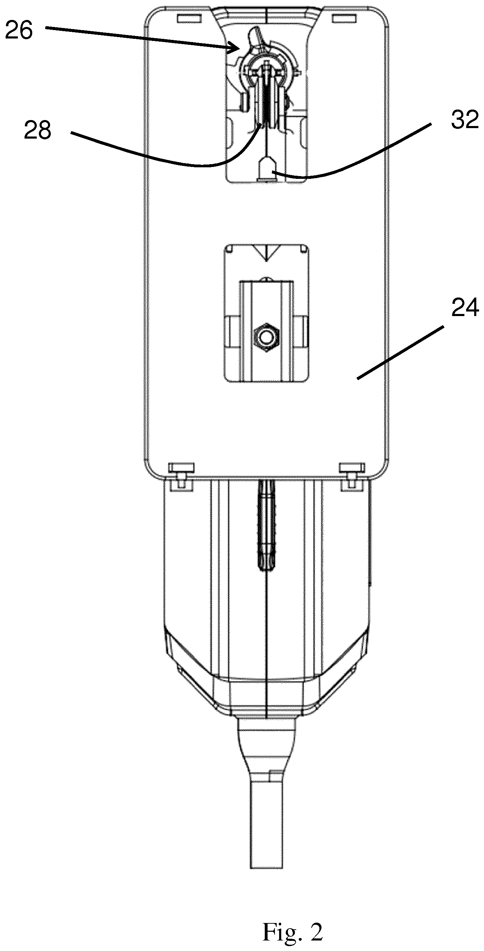

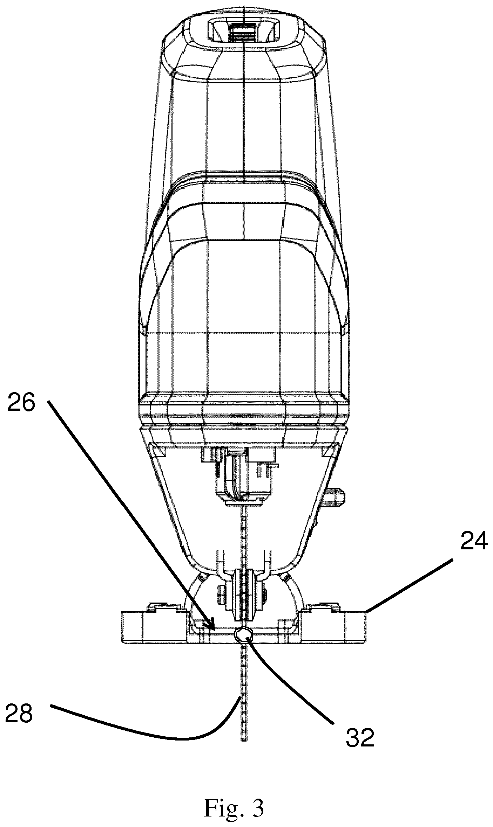

Now see Fig.2 and Fig.3. A LED 32 as an illuminating device is mounted on an end of the opening **26** of the base plate **24.** The LED **32** is located in a position such that the LED can directly illuminate the saw blade **28.** Preferably, the LED **32** is located immediately beneath the saw blade **28,** i.e. a middle position of the base plate **24,** so as to ensure the illumination of the LED no matter the user looks from which side of the saw blade **28.** Therefore it achieves the visually stationary effect in the invention. The LED **32** is totally contained in an internal part of the opening **26** and does not protrude from the opening **26.** This prevents the LED **32** from hindering the base plate **24** to be entirely pressed against the workpiece during operation.

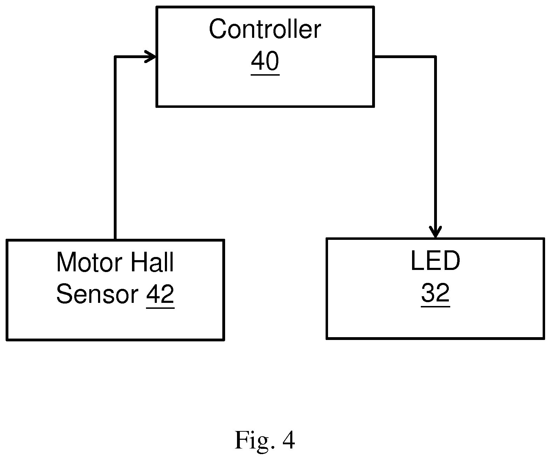

Fig.4 shows a controlling circuit of the LED in the jig saw to achieve the technical effect of the invention. The jig saw in its inner part includes a brushless motor and a motor Hall sensor **42** mounted in the brushless motor. As is well known to a person skilled in the art, a brushless motor typically has one or more Hall sensors mounted on a motor end cap or a Hall circuit board inside the motor, so as to detect the rotational speed of the motor by means of changes in the magnetic field induced by magnets fixed on the rotor. The controller **40** is connected to the motor Hall sensor **42** to receive the signals it provides, and the controller **40** is also connected to the LED **32** to control the frequency of illumination changes of the LED **32.**

During operation, the user initiates rotation of the motor by manipulating a switch on the jig saw, such as a trigger, etc., and the rotational speed of the motor may change according to the user's input, for example according to the degree of depression of the trigger. Then, the rotational speed of the motor is detected by the Hall sensor **42** and is fed back as an electrical signal from the motor Hall sensor **42** to the controller **40** of the LED **32** in Fig. 4. According to the rotational speed of the motor, the controller **40** can convert it into the movement frequency/speed of the cutting member. It should be noted that the rotational speed of the motor will not be directly equal to the movement frequency/speed of the cutting member because there are a series of transmission mechanisms and speed transformation devices between the motor and the cutting member. The controller **40** then controls the frequency of illumination changes of the LED **32** based on the movement frequency/speed of the cutting member. Such controlling of the LED **32** can be achieved by generating a pulsed output current. The LED **32** generates a stroboscopic effect upon receiving of the pulsed current, and such a stroboscopic effect causes the frequency of illumination changes to be the same as the frequency of the pulse.

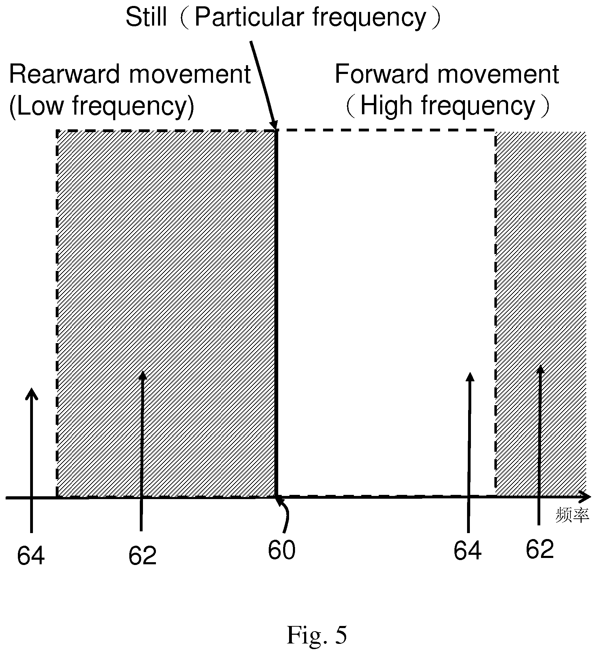

It should be noted that the different frequency of illumination changes of the LED will lead to a different effect of jig saw with naked eyes. Fig. 5 shows three different visual effects generated when the frequency of illumination changes of the LED from high to low. At a particular frequency of illumination changes of the LED, as indicated by arrow **60** in FIG. 5, the visual effect the user sees with the naked eyes is that the saw blade appears to be stationary. Such a particular frequency is an integer multiple of the movement frequency of the saw blade itself. When the frequency of illumination changes of the LED is lower than the particular frequency but larger than an previous integer multiple of the particular frequency, for example when the frequency of illumination changes of the LED lies between 1 and 2 times of the movement frequency of the saw blade itself, then an illusion of rearward movement of the saw blade is generated, as indicated by a region **62** in Fig. 5. Conversely, when the frequency of illumination changes of the LED is higher than a particular frequency but lower than a next integer multiple of the particular frequency, for example, when the frequency of illumination changes of the LED lies between 2 and 3 times of the movement frequency of the saw blade itself, an illusion of a forward movement of the saw blade but with a slow movement speed is generated, as indicated by a region **64** in FIG. 5. Note that the above visual effects of the still, rearward, and forward movement speeds are all caused by the stroboscopic effect, and the three visual effects are repeated periodically with an increasing or decreasing in frequency of illumination changes of the LED.

Thus, having described the above embodiments, a person skilled in the art will recognize that various modifications, additional structures, and equivalents may be used, as far as they fall within the scope of the claims. Accordingly, the above description should not be taken as limiting the scope of the invention as determined by the following claims.

For example, although a jig saw is used as an example of an electric cutting tool in the above embodiment to illustrate the invention, a person skilled in the art will recognize that other types of electric cutting tools, such as reciprocating saws and mitre saws, may also be applied with the present invention. This is because the stroboscopic effect can be used for the cutting member with a repeated motion along other paths, such as circular saw blade mounted in a mitre saw, in addition to the saw with a reciprocating motion in a straight line.

addition, while the detection of the movement speed of the cutting member (i.e., the saw blade) in the above embodiment is achieved by a motor Hall sensor existing in the brushless motor, it should be understood that other types of sensors may also be used. For example, in the case of a brushed motor, the object of the present invention can be achieved by mounting a special speed sensor in the motor.

In a variant embodiment, the electric cutting tool further contains a switch connected to the controller. The switch can be manually operated by the user to enable or disable the above light stroboscopic effect. That is, when the user wants to temporarily disable the function, he can operate the switch to temporarily make the LED either to be always on or off. And when the user wants to resume the function again, he can also operate the switch.

In another variant embodiment, the firmware carried by the electric cutting tool may have a function of bypassing, i.e. prohibiting the LED device to generate a changing illumination when the movement speed of the cutting member is below a threshold (eg. 12 Hz). Such a design can avoid the user's discomfort or disease visually caused by the low light stroboscopic frequency of the LED.

## Claims

1. An electric cutting tool (20), comprising:
a motor;
a cutting member (28) driven by the motor, the cutting member (28) adapted for a repetitive movement during operation;
a base plate (24) comprising an opening (26) through which the cutting member (28) penetrates;
an illuminating device (32); and
a controller (40) for controlling the illuminating device (32); the controller (40 being adapted for controlling the illuminating device (32) according to a rate of a movement of the cutting member (28) to generate an illumination varied in a particular frequency, the particular frequency making the cutting member (28) representing a still visual effect when the cutting member (28) is moving at said rate;
**characterized in that**
the illuminating device (32) is located on the base plate (24).

2. The electric cutting tool (20) according to claim 1, further comprises a sensor (42) for measuring a rotational speed of the motor; the sensor (42) measuring the rotational speed of the motor during the operation and transmitting the speed to the controller (40); the controller (40) generating a signal according to the speed of the motor and controlling the illuminating device (32) to generate the illumination varied in the particular frequency.

3. The electric cutting tool (20) according to claim 1 or claim 2, wherein the sensor (42) is a Hall sensor fixed to the motor.

4. The electric cutting tool (20) according to any preceding claim, further comprises a switch connected to the controller (40); the switch adapted to enable the controller (40) to control the illuminating device (32) to generate the illumination varied in the particular frequency or prohibit the illuminating device (32) from generating the illumination varied in the particular frequency.

5. The electric cutting tool (20) according to any preceding claim, wherein the controller (40) is adapted to prohibit the illuminating device (32) from generating the illumination varied in the particular frequency when the speed of the cutting member (28) is lower than a threshold.

6. The electric cutting tool (20) according to any one of the preceding claims, wherein the electric cutting tool (20) is a jig saw.

7. The electric cutting tool (20) according to any one of the preceding claims, wherein the illuminating device (32) is a light-emitting diode.

8. The electric cutting tool (20) according to any one of the preceding claims, wherein the illuminating device (32) is located at an end of the opening (26) of the base plate (24).

9. The electric cutting tool (20) according to claim 8, wherein the illuminating device (32) is located immediately beneath the cutting member (28).

10. The electric cutting tool (20) according to any one of the preceding claims, wherein the opening (26) is in a central position of the base plate.

11. The electric cutting tool (20) according to any one of the preceding claims, wherein the opening (26) is configured to permit the cutting member (28) to penetrate the base plate (24) in a vertical direction.

## Patentansprüche

1. Elektrisches Schneidwerkzeug (20), das Folgendes umfasst:
einen Motor,
ein Schneidelement (28), das durch den Motor angetrieben wird, wobei das Schneidelement (28) für eine wiederholte Bewegung während des Betriebs angepasst ist,
eine Grundplatte (24), die eine Öffnung (26) umfasst, durch die das Schneidelement (28) hindurchdringt,
eine Beleuchtungseinrichtung (32) und
eine Steuerung (40) zum Steuern der Beleuchtungseinrichtung (32), wobei die Steuerung (40) angepasst ist zum Steuern der Beleuchtungseinrichtung (32) entsprechend einem Tempo einer Bewegung des Schneidelements (28), um eine Beleuchtung zu erzeugen, die in einer bestimmten Frequenz verändert wird, wobei die bestimmte Frequenz veranlasst, dass das Schneidelement (28) eine feststehende visuelle Wirkung darstellt, wenn sich das Schneidelement (28) mit dem Tempo bewegt, **dadurch gekennzeichnet, dass**
die Beleuchtungseinrichtung (32) auf der Grundplatte (24) angeordnet ist.

2. Elektrisches Schneidwerkzeug (20) nach Anspruch 1, das ferner einen Sensor (42) zum Messen einer Drehzahl des Motors umfasst, wobei der Sensor (42) die Drehzahl des Motors während des Betriebs misst und die Geschwindigkeit an die Steuerung (40) übermittelt, wobei die Steuerung (40) ein Signal entsprechend der Geschwindigkeit des Motors erzeugt und die Beleuchtungseinrichtung (32) steuert, um die Beleuchtung zu erzeugen, die in der bestimmten Frequenz verändert wird.

3. Elektrisches Schneidwerkzeug (20) nach Anspruch 1 oder Anspruch 2, wobei der Sensor (42) ein an dem Motor befestigter Hall-Sensor ist.

4. Elektrisches Schneidwerkzeug (20) nach einem der vorhergehenden Ansprüche, das ferner einen Schalter umfasst, der mit der Steuerung (40) verbunden ist, wobei der Schalter angepasst ist, um zu ermöglichen, dass die Steuerung (40) die Beleuchtungseinrichtung (32) steuert, um die Beleuchtung zu erzeugen, die in der bestimmten Frequenz verändert wird, oder die Beleuchtungseinrichtung (32) daran hindert, die Beleuchtung zu erzeugen, die in der bestimmten Frequenz verändert wird.

5. Elektrisches Schneidwerkzeug (20) nach einem der vorhergehenden Ansprüche, wobei die Steuerung (40) angepasst ist, um die Beleuchtungseinrichtung (32) daran zu hindern, die Beleuchtung zu erzeugen, die in der bestimmten Frequenz verändert wird, wenn die Geschwindigkeit des Schneidelements (28) niedriger als ein Schwellenwert ist.

6. Elektrisches Schneidwerkzeug (20) nach einem der vorhergehenden Ansprüche, wobei das elektrische Schneidwerkzeug (20) eine Stichsäge ist.

7. Elektrisches Schneidwerkzeug (20) nach einem der vorhergehenden Ansprüche, wobei die Beleuchtungseinrichtung (32) eine Licht emittierende Diode ist.

8. Elektrisches Schneidwerkzeug (20) nach einem der vorhergehenden Ansprüche, wobei die Beleuchtungseinrichtung (32) an einem Ende der Öffnung (26) der Grundplatte (24) angeordnet ist.

9. Elektrisches Schneidwerkzeug (20) nach Anspruch 8, wobei die Beleuchtungseinrichtung (32) unmittelbar unterhalb des Schneidelements (28) angeordnet ist.

10. Elektrisches Schneidwerkzeug (20) nach einem der vorhergehenden Ansprüche, wobei sich die Öffnung (26) in einer mittigen Position der Grundplatte befindet.

11. Elektrisches Schneidwerkzeug (20) nach einem der vorhergehenden Ansprüche, wobei die Öffnung (26) dafür konfiguriert ist, zu ermöglichen, dass das Schneidelement (28) die Grundplatte (24) in einer vertikalen Richtung durchdringt.

## Revendications

1. Outil de coupe électrique (20), comprenant :
un moteur ;
un élément de coupe (28) entrainé par le moteur, l'élément de coupe (28) étant adapté pour effectuer un déplacement répétitif au cours du fonctionnement ;
une plaque de base (24) comprenant une ouverture (26) à travers laquelle l'élément de coupe (28) pénètre ;
un dispositif d'éclairage (23) ; et
un dispositif de commande (40) pour contrôler le dispositif d'éclairage (32) ; le dispositif de commande (40) étant adapté pour contrôler le dispositif d'éclairage (32) en fonction d'une vitesse d'un déplacement de l'élément de coupe (28) pour générer un éclairage varié dans une fréquence spécifique, la fréquence spécifique entraînant l'élément de coupe (28) à représenter un effet toujours visible lorsque l'élément de coupe (28) se déplace à ladite vitesse ; **caractérisé en ce que** :
le dispositif d'éclairage (32) est disposé sur la plaque de base (24).

2. Outil de coupe électrique (20) selon la revendication 1, comprenant en outre un capteur (42) pour mesurer une vitesse de rotation du moteur ; le capteur (42) mesurant la vitesse de rotation du moteur au cours du fonctionnement et transmettant la vitesse au dispositif de commande (40) ; le dispositif de commande (40) générant un signal en fonction de la vitesse du moteur et contrôlant le dispositif d'éclairage (32) pour générer l'éclairage varié dans la fréquence spécifique.

3. Outil de coupe électrique (20) selon les revendications 1 ou 2, dans lequel le capteur (42) est un capteur à effet Hall fixé sur le moteur.

4. Outil de coupe électrique (20) selon l'une quelconque des revendications précédentes, comprenant en outre un commutateur connecté au dispositif de commande (40) ; le commutateur étant adapté pour permettre au dispositif de commande (40) de contrôler le dispositif d'éclairage (32) pour générer l'éclairage varié dans la fréquence spécifique ou pour empêcher le dispositif d'éclairage (32) de générer l'éclairage varié dans la fréquence spécifique.

5. Outil de coupe électrique (20) selon l'une quelconque des revendications précédentes, dans lequel le dispositif de commande (40) est adapté pour empêcher le dispositif d'éclairage (32) de générer l'éclairage varié dans la fréquence spécifique lorsque a vitesse de l'élément de coupe (28) est inférieure à un seuil.

6. Outil de coupe électrique (20) selon l'une quelconque des revendications précédentes, dans lequel l'outil de coupe électrique (20) est une scie sauteuse.

7. Outil de coupe électrique (20) selon l'une quelconque des revendications précédentes, dans lequel le dispositif d'éclairage (32) est une diode électroluminescente.

8. Outil de coupe électrique (20) selon l'une quelconque des revendications précédentes, dans lequel le dispositif d'éclairage (32) est disposé au niveau d'une extrémité de l'ouverture (26) de la plaque de base (24).

9. Outil de coupe électrique (20) selon la revendication 8, dans lequel le dispositif d'éclairage (32) est disposé immédiatement au-dessous de l'élément de coupe (28).

10. Outil de coupe électrique (20) selon l'une quelconque des revendications précédentes, dans lequel l'ouverture (26) se situe dans une position centrale de la plaque de base.

11. Outil de coupe électrique (20) selon l'une quelconque des revendications précédentes, dans lequel l'ouverture (26) est configurée pour permettre à l'élément de coupe (28) de pénétrer dans la plaque de base (24) dans une direction verticale.
